# EUROPÄISCHE PATENTSCHRIFT

(11) **EP 1 932 459 B1**
(45) Veröffentlichungstag und Bekanntmachung des Hinweises auf die Patenterteilung: **07.03.2012**
(21) Anmeldenummer: 07024188.0
(22) Anmeldetag: 13.12.2007
(51) Int. Cl.: A47J 47/00

(54) **Küchen-Utensil mit Schneidebrett**
Kitchen utensil with cutting board
Ustensile de cuisine doté d'une planche à découper

(30) Priorität: 14.12.2006 DE 102006059484; 17.09.2007 DE 102007044306
(43) Veröffentlichungstag der Anmeldung: 18.06.2008
(73) Patentinhaber: Schwanekamp, Stephan, 48712 Gescher (DE); Brüning, Jochen, 48712 Gescher (DE)
(72) Erfinder: Schwanekamp, Stefan, 48712 Gescher (DE); Büning, Jochen, 48712 Gescher (DE)
(74) Vertreter: Hoffmeister, Helmut

(56) Entgegenhaltungen:
- DE-U1-202006 016 445
- JP-U- 59 157 646
- US-A- 2 609 024

## Beschreibung

Die Erfindung betrifft ein Küchen-Utensil, mit wenigstens einem kastenförmigen Trägerteil und einem Schneidebrett, das auf das Trägerteil aufgelegt ist, sowie wenigstens einen aus dem Trägerteil herausnehmbaren Behälter, in den hinein bei entsprechender Stellung zum Rand des Schneidebretts Schneidgut von der Oberseite des Schneidebretts abwerfbar ist.

Aus DE 93 02 017 ist eine Haushaltsbox mit Deckel bekannt, der sich in eine Richtung über die wannenförmige Box schieben lässt, und der einseitig als Schneidebrett verwendbar ist. Eine ähnliche Haushaltsbox ist aus der US 2 609 024 A bekannt.

Nachteilig bei der bekannten Vorrichtung ist, dass das Schneidebrett als Deckel für die wannenförmige Box dient, also die Dimension der Box an die des Schneidebretts angepasst ist. Zudem ist nachteilig, dass sich das als Deckel konzipierte Schneidebrett nur einseitig über eine Schmalseite der Box hin verschieben lässt, wodurch immer nur der der öffenbaren Schmalseite gegenüber liegende Bereich der Box zugänglich ist, um Schneidgut von der Oberseite des Schneidbretts abzuwerfen. Eine Trennung von Schneidgut und Abfällen ist somit nicht möglich, jedenfalls nicht so voneinander räumlich trennbar, dass ein unproblematisches Trennen von Schneidgut und Abfall möglich ist.

Aufgabe der vorliegenden Erfindung ist es, ein neuartiges, multifunktionelles Küchen-Utensil der eingangs genannten Art zu entwickeln, dessen Bedienung benutzerfreundlich ist, das trotz relativ einfacher Konstruktion weitere Nutzungsmöglichkeiten bietet und bei dem das Schneidebrett grundsätzlich beidseitig genutzt werden kann.

Diese Aufgabe ist durch ein gattungsgemäßes Küchen-Utensil mit den Merkmalen des Anspruches 1 gelöst. Danach ist das Küchen-Utensil der eingangs genannten Art derart ausgestaltet, dass das Trägerteil aus einem Boden und zwei Seitenwänden besteht, die in eine im Schneidebrett angelegte Nut greifen, wodurch das Schneidebrett an dem Trägerteil in Längsrichtung in der Nut führbar ist, und an die innerhalb des Trägerteils jeweils mindestens eine Führungsschiene angelegt ist, in der der mindestens eine herausnehmbare Behälter führbar und innerhalb des Trägerteils in Längsrichtung des Schneidebretts verschiebbar und über beide Schmalseiten des Schneidebretts hinaus ausfahrbar ist und in der unterhalb des Behälters, den herausnehmbaren Behälter mit wenigstens zwei Seitenwänden umfassend, die parallel zu den Seitenwänden des Trägerteils laufen, mindestens eine verschiebbare Lade führbar ist, die über beide Schmalseiten des Schneidebretts hinaus ausfahrbar ist.

In erfindungsgemäßer Weise ist erkannt worden, dass sich ein Trägerteil, welches nicht als Box zum Auffangen von Schneidgut dient, da es nur aus zwei Seitenwänden und einem Boden besteht, also insofern keine geschlossene Wanne oder Box darstellt, zum Auflegen und Führen eines Schneidbretts und zum Einlegen und Führen von Behältern und mindestens einer Lade verwendbar ist. Dadurch sind die Behälter und die Lade unabhängig von der Größe des Brettes dimensionierbar, da deren Seitenwände nicht zur Auflage und zum Führen des Schneidebrettes dienen. Zudem lässt sich in erfindungsgemäßer Weise das Schneidebrett über beide Schmalseiten des Trägerteils ziehen, wodurch je nach Wunsch entweder die eine oder die andere Schmalseite unterhalb des Schneidebrettes zugänglich ist, sich also Schneidgut von Abfällen in unterhalb des Schneidebrettes befindlichen Behältern oder auf der Lade räumlich, das heißt in größtmöglicher Distanz voneinander abwerfen lassen, nämlich rechts und links unterhalb des Schneidebrettes. Aufgrund der Konstruktion des Trägerteils, nämlich mit zwei Seitenwänden und Boden, lassen sich darüber hinaus in erfindungsgemäßer Weise die Behälter und die Lade relativ zum Schneidebrett verschieben, nämlich über die Schmalseiten unterhalb des Schneidebrettes herausziehen. Damit die Behälter und die Lade unabhängig voneinander und zum Schneidebrett verschiebbar und innerhalb des Trägerteils festlegbar sind, ist zudem in erfindungsgemäßer Weise an jeweils den Seitenwänden des Trägerteils mindestens eine Führungsschiene im Inneren des Trägerteils angelegt, die separate Führungen und entsprechend Arretierungen für die Behälter und die Lade aufweist. Damit sowohl die Behälter zum Trägerteil als auch zur Lade unabhängig voneinander verschiebbar sind, umfasst die Lade in erfindungsgemäßer Weise mit wenigstens zwei Seitenwänden die Behälter, so dass zumindest die Stirnseite der Lade, die parallel zur Schmalseite des Trägerteils oder Schneidebrettes liegt, offen ist, wodurch sich die Behälter über die Stirnseite der Lade, ohne diese zu verschieben, in der Führungsschiene verschieben lassen. Damit ist es möglich, die Behälter und die Lade unabhängig voneinander in verschiedenen Richtungen zu bewegen, so dass beispielsweise an der einen Schmalseite des Schneidebretts das Schneidgut und/oder der Bratensaft in den Behältern und auf der anderen der Abfall in der Lade aufgenommen werden können.

Es ist auch daran zu denken eine wesentliche Verbesserung des Benutzungskomforts dadurch zu erreichen, dass die Lade und/oder die Behälter innerhalb einer oder zweier in die Unterseite des Schneidebretts eingelassen Führungsnuten getragen und geführt sind. Auch durch diese Konstruktion ist es möglich, die Behälter und die Lade unabhängig voneinander in verschiedenen Richtungen zu bewegen.

Zudem ist die obige Aufgabe in Hinblick auf die beidseitige Nutzung des Schneidebrettes durch eine im Schneidebrett angelegte Nut gelöst, in die die Seitenwände des Trägerteils greifen. Dabei kann die Nut seitlich oder jeweils auf beiden Seiten des Brettes als Einfachnut oder als zwei parallel laufenden Nuten, in die jeweils eine Seitenwand des Trägerteils greift, ausgebildet sein. Bei einer Einfachnut liegt das Brett auf einer Seitenwand des Trägerteils auf und wird über die andere Seitenwand, die in die eine Nut greift, geführt.

Folglich ist ein neuartiges, multifunktionelles Küchen-Utensil der eingangs genannten Art bereitgestellt, dessen Bedienung benutzerfreundlich ist, das trotz relativ einfacher Konstruktion weitere Nutzungsmöglichkeiten bietet und bei dem das Schneidebrett grundsätzlich beidseitig genutzt werden kann.

Vorzugsweise ist die Nut jeweils auf einer Seite des Schneidebrettes seitlich ausgebildet, so dass zum einen die nach oben hin, zum Inneren des Trägerteils abgewinkelten Seitenwände jeweils von einer Seite in die Nut greifen, wodurch sich zum anderen eine stabilere Auflage für das Schneidebrett und insgesamt eine hohe Stabilität des Küchen-Utensils ausbilden lässt. Zudem lässt sich das Schneidebrett ohne Probleme beidseitig verwenden, indem das Brett einfach um 180° gewendet und mit der seitlich angelegten Nut über die abgewinkelten Seitenwände geschoben wird. Auf diese Weise ist das Schneidbrett beidseitig, das heißt, mit seiner Unter- oder Oberseite zum Inneren des Trägerteils gerichtet, an dem Trägerteil führbar und festlegbar.

Damit das Küchen-Utensil transportabel und bei Gebrauch oder zum Aufhängen an eine Wand die nötige Stabilität aufweist, insbesondere nicht das Schneidebrett verrutscht oder vom Trägerteil abfällt, ist es vorteilhaft, wenn das Schneidebrett am Trägerteil verriegelbar festlegbar ist. Besonders bevorzugt sind hierbei Federelemente zu nennen, die an den Seitenwänden des Trägerteils ausgebildet sind, die in die Nut des Schneidebrettes greifen, wodurch eine lösbare Verbindung zwischen Schneidebrett und Trägerteil herstellbar ist. Das Schneidebrett kann aber auch auf andere Weise an dem Trägerteil festlegbar sein, beispielsweise über an den Ecken des Trägerteils angeordnete, gewölbte Vorsprünge oder Zapfenelemente, die zu den entsprechenden Vertiefungen bzw. Bohrungen am Schneidebrett kompatibel sind. So kann das Schneidebrett mit einem Handgriff von dem Trägerteil gehoben und umgedreht, bzw. nach seiner Abnutzung ausgetauscht werden. Wird eine Drehung des Schneidebretts nicht gewünscht, kann dieses auch mit dem Trägerteil verschraubt werden. Anstelle der Zapfenelemente und Bohrungen können Magnetelemente zum Einsatz kommen, die beispielsweise in das Schneidebrett und dementsprechend in die Kanten der Seitenwände des Trägerteils eingelassen sind.

In einer bevorzugten Ausführungsform sind die Federelemente an den Führungsschienen angebracht und greifen durch Ausnehmungen der Seitenwände, so das zum einen die Führungsschienen an des Seitenwänden justierbar und festlegbar sind und zum anderen die durch Ausnehmungen in den Seitenwänden geführten Federelemente zur Festlegung und Arretierung des Schneidebrettes dienen.

Wenn das Schneidebrett an dem Trägerteil abnehmbar angeordnet ist, können seine beiden Flachseiten als Arbeitsflächen genutzt werden, von denen die eine, die mit einer umlaufenden Saft- bzw. Ablaufrille versehen ist, für die Zubereitung von Fleischprodukten, dagegen die andere zum Schneiden von Gemüse bestimmt werden kann.

Je nach Einsatzerfordernis des Küchen-Utensils sind die Behälter quaderförmig gestaltet und nach oben hin offen oder nach oben und zur Seite in offen.

Vorzugsweise ist das kastenförmige Trägerteil auf beiden Schmalseiten des Schneidebretts offen; die Lade ist mit zwei jeweils an ihren Enden befindlichen Behältern bestückt.

Auch können mit Vorteil in der Lade oder im Trägerteil mehrere quaderförmige Behälter angeordnet sein und die Behälter untereinander durch an den kontaktierenden Behälterseiten angebrachte Verbindungsteile lösbar miteinander verbindbar sein. Der jeweils über die Kante der Lade bzw. des Trägers nach außen geschobene Behälter fällt ab oder kann ausgeklinkt werden.

Die einzelnen Behälter können nach Bedarf durch Trennwände bzw. Inlays in noch kleinere Fächer geteilt werden. Sie können auch mit unterschiedlichen Schneidwerkzeugen, wie Gemüsehobel oder Käsereibe, oder auch mit Sieben ausgestattet sein. Schließlich können Behälter von unterschiedlicher Größe gefertigt werden, deren Gesamtmaß ins Innere des Trägerteils hineinpasst.

Eine andere Konstruktion ergibt sich, wenn im Inneren des Trägerteils mehrere kleine schubladenartige Behälter Platz finden, die über die seitliche, sich über die gesamte Länge des Trägerteils erstreckende Öffnung herausnehmbar bzw. -schiebbar sind. Von großem Vorteil ist, dass diese Öffnung durch die Seitenwand der Lade abgedeckt ist und erst beim Herausziehen der Lade freigegeben wird. Dadurch können nach Bedarf aus dem Trägerteil eine oder mehrere kleine Behälter herausgenommen bzw. ins Innere des Trägerteils eingeschoben werden.

Vorzugweise weist die Lade an der zur Schmalseite des Schneidebrettes parallel laufenden Seite eine Aufkantung auf, so dass beispielweise mit der Lade aufgefangener Gemüse- oder Bratensaft nicht unkontrolliert abfließt. Auch eignet sich eine solche Aufkantung der Lade, um mit der Lade Behälter, die von der Lade umfasst werden, unter dem Schneidbrett hervorzuziehen, nämlich dadurch, dass die Wandung der Behälter mit der Aufkantung der Lade in Kontakt bringbar ist.

Das Küchen-Utensil kann mit fest angebrachten oder abnehmbaren Fußelementen, vorzugsweise in rutschfester Ausführung, versehen sein. Die Fußelemente können höhenverstellbar sein. Insbesondere eignen sich integral ausgebildete Fuß-/Aufhängeelemente, wie beispielsweise ein stabiler O-Ring, der zum einen eine rutschfeste Standfläche bildet und zum anderen hervorragend zur Anbringung des Küchen-Utensils an der Wand dient.

Als Materialien für das Schneidebrett kommen Holz, insbesondere Buche, Holzwerkstoff, Kunststoffe, wie Polyethylen oder Duroplaste, Glas, keramische Werkstoffe, Natursteine oder Metalle in Frage.

Ferner kann das Schneidebrett aus wenigstens zwei Materialschichten zusammengefügt sein, von denen die eine aus einem anderen Material als die andere besteht. Beispielsweise kann eine Seite des Schneidebretts aus Holz und die andere aus Marmor bestehen.

Die übrigen Bauteile der Vorrichtung können aus Holz oder Holzwerkstoff, aus Kunststoff, Glas, Beton oder Metall hergestellt sein.

Die Materialauswahl für das Küchen-Utensil richtet sich nach praktischen und ästhetischen Gesichtspunkten. Das Schneidebrett wird vorzugsweise aus Holz oder einem Duroplasten hergestellt. Es ist jedoch auch möglich, es aus Glas, Naturstein oder Metall zu fertigen. Die übrigen Teile werden vorzugsweise aus einem hitzebeständigen, leicht zu reinigenden Kunststoff-Material hergestellt.

Da es sich insgesamt um eine flache Anordnung handelt, kann das Küchen-Utensil auch gegen eine Wand geklappt und über eine Schnapp- oder Magnethalterung in aufrechter Position gehalten werden.

Vorzugsweise verfügt das Schneidebrett über eine fensterartige Durchlassöffnung oder eine randseitige Ausnehmung, durch die die zerkleinerten Produkte, wie Gemüse, in einen unterhalb der Durchlassöffnung positionierten Behälter, der eine kleine Schublade bildet, eingeschoben oder abgeworfen werden können.

Das Küchen-Utensil eignet sich auch für die verfügbaren Arbeitsflächen in der Küche, die für den Benutzer zu niedrig sind und dadurch kann sich ergonometrisch den hochwüchsigen Benutzern besser anpassen.

In der Beschreibung wird von einem rechteckigen Schneidebrett ausgegangen, dessen Schmalseiten den Abwerfbereich umfassen. Es sollen andere, eventuell quadratische oder runde Formulierungen des Schneidebretts jedoch nicht ausgeschlossen sein.

Im Folgenden sind weitere Vorteile der Erfindung aufgelistet:
- Alle Teile der Vorrichtung sind miteinander nicht verbunden, trotzdem ist die Vorrichtung in zusammengelegtem Zustand stabil.
- Alle Teile der Vorrichtung können einzeln unabhängig von anderen benutzt werden.
- Das Küchen-Utensil ist komplett zerlegbar und damit einfach zu reinigen und zu trocknen.
- Das Küchen-Utensil ist nicht nur für Schneiden und Zerkleinern von Lebensmittel, aber auch für andere zahlreiche Küchenarbeiten geeignet, beispielsweise zum Panieren und zur Grillvorbereitung.

Ausführungsbeispiele der Erfindung werden anhand der Zeichnung näher erläutert. Die Figuren zeigen:
- Fig. 1: das Küchen-Utensil gemäß Erfindung in einer perspektivischen Ansicht;
- Fig. 2: das Trägerteil des Küchen-Utensil gemäß Fig. 1 beim Einsetzen einer Führungsschiene in einer perspektivischen Ansicht;
- Fig. 3: das Trägerteil mit an den Seitenwänden anlegbaren Führungsschienen
- Fig. 4: das Trägerteil mit darin untergebrachten kleinen Behältern und die teilweise herausgezogene Lade in einer perspektivischen Ansicht von oben;
- Fig. 5: eine schematische Schnittdarstellung der Anordnung von Trägerteil, Führungsschiene, Lade und Behälter in einer weiteren Ausführungsform;
- Fig. 6: das Küchen-Utensil gemäß Erfindung in einer zweiten Ausführungsform in einer perspektivischen Ansicht;
- Fig. 7: das Küchen-Utensil gemäß Fig. 6 nach der Abnahme des Schneidebretts von dem Trägerteil, ebenso in einer perspektivischen Ansicht;
- Figuren 8a und 8b: den Trägerteil mit darin untergebrachten kleinen Behältern und die teilweise herausgezogene Lade in einer perspektivischen Ansicht von oben;
- Figuren 9a und 9b: den Trägerteil und die Lade vor und nach dem Zusammenschieben, ebenfalls in einer perspektivischen Ansicht;
- Fig. 10: Detail einer Ecke mit Magnetelement;
- Fig. 11: Detail einer Ecke mit Zapfenelement;
- Fig. 12: ein Küchen-Utensil in einer dritten Ausführungsform;
- Fig. 13: eine Stirnseite des Küchen-Utensils gemäß Figur 12 mit Schneidebrett und Trägerteil;
- Fig. 14: zwei verbundene Behälter zum Einsetzen in die Lade;
- Fig. 15: eine auseinander gezogene Darstellung der wesentlichen Teile des KüchenUtensil gemäß Figur 12;
- Fig. 16: eine schematische Schnittdarstellung der Anordnung von Trägerteil, Lade und Behälter in einer vierten Ausführungsform;
- Fig. 17: eine Serie von verbundenen Behältern in schematischer Darstellung.

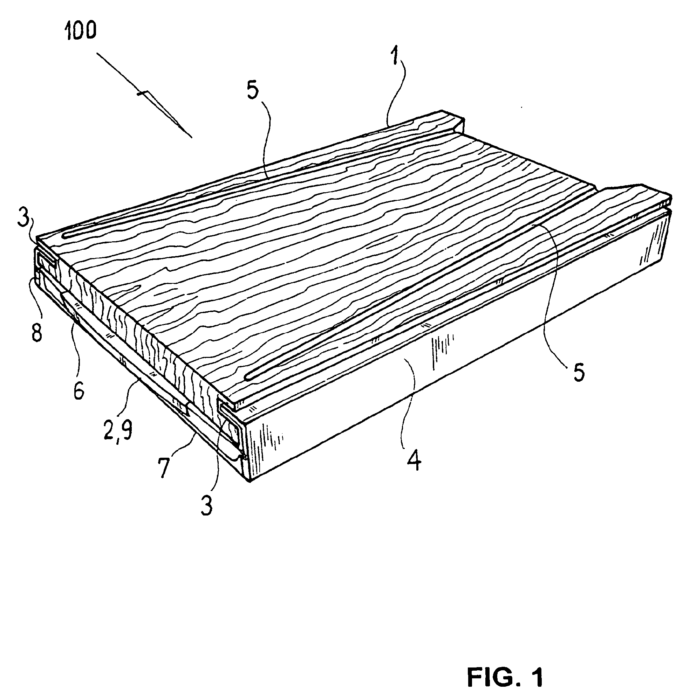

In den Figuren 1 bis 5 ist ein Küchen-Utensil 100 dargestellt, bestehend aus einem hölzernen, rechteckigen Schneidebrett 1 mit Ablaufrille 5, und einer darunter angeordneten Auffangvorrichtung 2 für das Schneidgut und Abfälle. Das Schneidebrett 1 ist über eine Nut 3 auf die nach Innen umgebogenen Seitenwände 4 eines Trägerteils 6 geschoben.

Die Auffangvorrichtung 2 setzt sich aus einem kastenförmigen Trägerteil 6 mit Seitenwänden 4 und Bodenteil 7 und mit im Inneren des Trägerteils 6 an den Seitenwänden 4 angelegten Führungsschienen 8 zusammen, in denen unterhalb des Schneidebrettes 1 eine Lade 9 und von dieser umfassende Behälter 10 führbar und festlegbar sind.

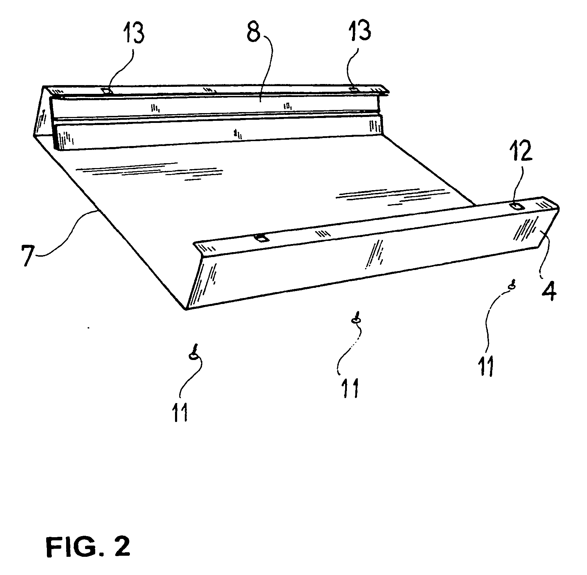

Figur 2 zeigt im Besonderen, wie die eine Führungsschiene 8 an die Seitenwand 4 des Trägerteils 6 anlegbar und zusätzlich über Schraubverbindungen mit dem Trägerteil 6 verbindbar ist.

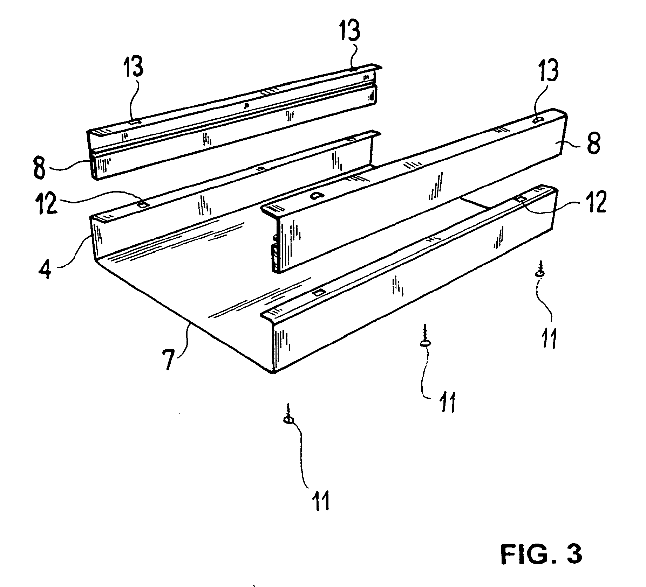

Die Figur 3 zeigt, wie die Führungsschienen 8 an den Seitenwänden 4 des Trägerteils 6 anlegbar sind und über zusätzliche Schraubverbindungen 11, die durch das Bodenteil 7 im Bereich der Seitenwände 4 greifen, mit dem Trägerteil 6 verbunden werden. An den Seitenwänden 4 des Trägerteils 6 sind Ausnehmungen 12 ausgespart, durch die Federelemente 13 der Führungsschienen 8 greifen, über die das Schneidebrett 1 auf dem Trägerteil 6 arretierbar ist.

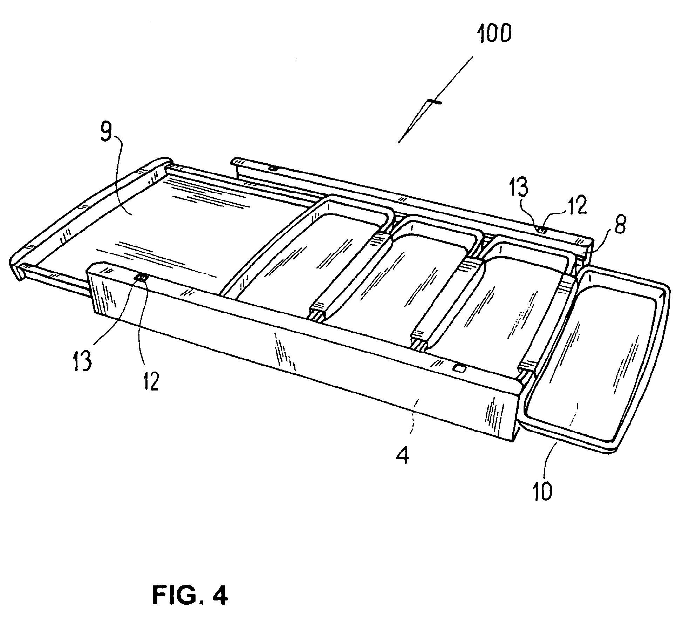

Aus der Darstellung des Küchen-Utensils in Figur 4 wird die Flexibilität des Küchen-Utensils deutlich. Dabei ist das Trägerteil 6 ohne Schneidebrett 1 gezeigt. Im Inneren des Trägerteils 6 werden in den an dein Seitenwänden 4 des Trägerteils 6 angelegten Führungsschienen 8 oberhalb einer Lade 9 Behälter 10 geführt, die aneinander gekoppelt sind und die unabhängig von der Lade 9 und dem Schneidbrett 1 im Trägerteil 6 verschiebbar sind. Auch die Lade 9 ist unabhängig vom Schneidbrett 1 und den Behältern 10 verschiebbar, so dass sich die Behälter 10 und die Lade 9 in entgegen gesetzter Richtung im Trägerteil 6 bewegen lassen.

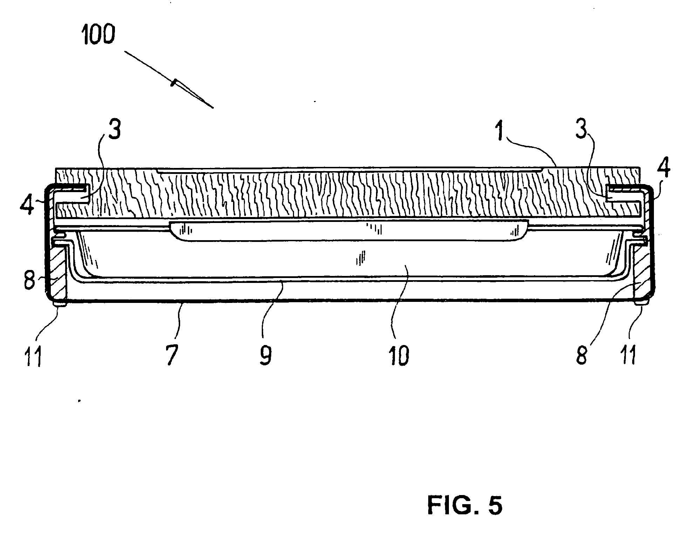

Die Figur 5 zeigt den Aufbau des Küchen-Utensils 100 und verdeutlicht durch konstruktiv bedingt die Funktion des Küchen-Utensils 100, denn die Lade 9 wird unabhängig von einem Behälter 10 in der Führungsschiene 8 geführt. Auch die seitlich angelegte Nut 3 des Schneidebretts 1 macht deutlich, dass das Schneidebrett 1 unproblematisch beidseitig verwendbar und auf dem Trägerteil 6 auflegbar, und über die nach Innen des Trägerteils 6 gebogenen Seitenwände 4 in Längsrichtung des Trägerteils 6 führbar ist. Die zur Festlegung der Führungsschienen 8 durch das Bodenteil 7 greifenden Schraubverbindungen 11 dienen bei dieser Ausführungsform zusätzlich als Füße.

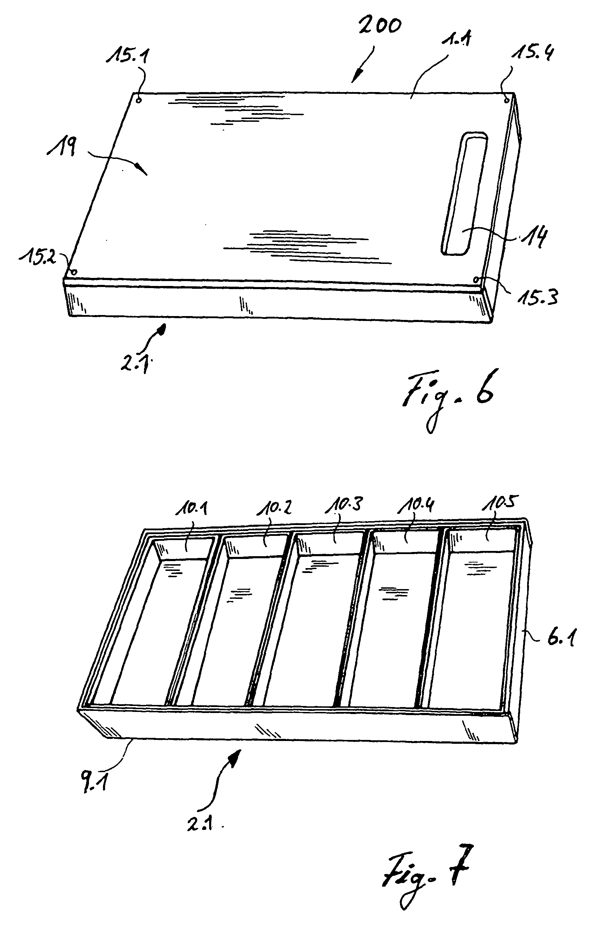

In den Figuren 6 bis 8b ist ein Küchen-Utensil 200 in einer zweiten Ausführungsform dargestellt, bestehend aus einem hölzernen, rechteckigen Schneidebrett 1.1 und einer darunter angeordneten Auffangvorrichtung 2.1 für das Schneidgut und Abfälle. Das Schneidebrett 1.1 weist eine fensterartige Durchlassöffnung 14 für das Schneidgut auf. Es ist über vier an seinen Ecken eingebrachte Bohrungen 15.1, 15.2, 15.3, 15.4 zum Festlegen des Schneidebretts an der Auffangvorrichtung 2.1 versehen.

Die Auffangvorrichtung 2.1 setzt sich aus zwei Hauptteilen, nämlich aus einem kastenförmigen Trägerteil 10 und einer den Trägerteil 6.1 umgreifenden Lade 9.1 zusammen, die gegenüber dem Trägerteil 6.1 in einer mit dem Pfeil X gezeigten Richtung geführt verschiebbar ist.

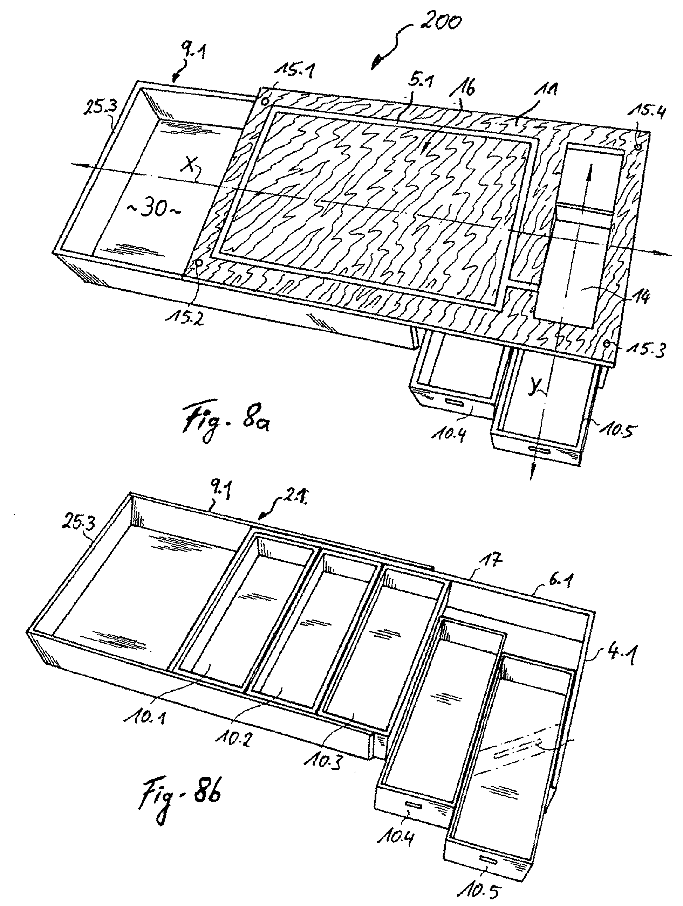

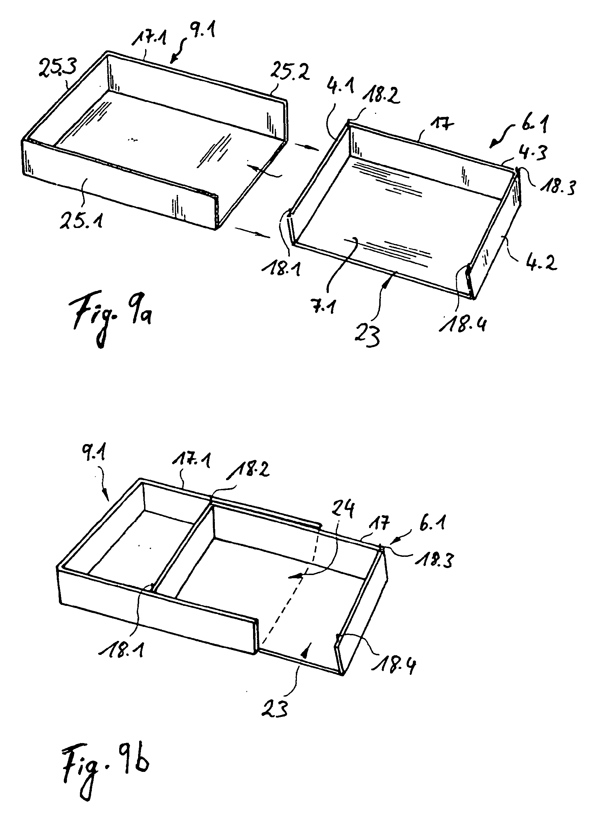

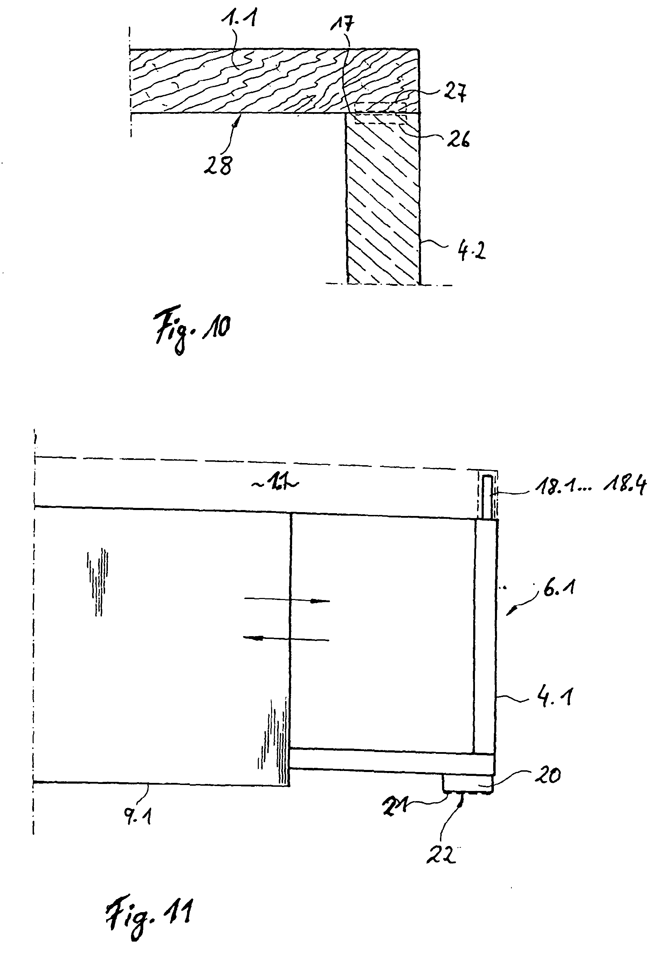

Das Schneidebrett 1.1 ist mit seiner ersten, in Fig. 8a gezeigten, eine umlaufende Ablaufrille 5.1 aufweisenden Flachseite 16 auf eine obere, freie Kante 17 des Trägerteils 6.1 gelegt und gegen dort befindliche, nach oben ragende Zapfenelemente 18.1, 18.2, 18.3, 18.4 (vgl. Figuren 9a, 9b und 11) gedrückt. Das Schneidebrett 1.1 kann mit einem Handgriff vom Trägerteil abgenommen werden, da für die Bohrungen 15.1, 15.2, 15.3, 15.4 und Zapfenelemente 18.1, 18.2, 18.3, 18.4 eine Spielpassung vorgesehen ist.

Wie die Fig. 6 zeigt, ist eine der ersten Flachseite 16 gegenüberliegende, zweite Flachseite 19 des Schneidebretts 1.1 eben, d. h. sie weist keine Ablauf- bzw. Saftrillen auf. Das Schneidebrett 1.1 kann nach Wahl mit der einen oder anderen Seite nach oben auf das Trägerteil 6.1 aufgelegt werden.

Die Auffangvorrichtung 2 ist detailliert in den Figuren 7, 8a, 9a und 9b gezeigt.

Das Trägerteil 6.1 besteht aus einem Bodenteil 7.1 und drei Seitenwänden 4.1, 4.2, 4.3. Die Lade 5 umfasst einen Boden 30 und drei Seitenwände 16.1, 16.2, 16.3. Trägerteil 6.1 und Lade 9.1 sind schubladenartig nach oben offen.

Im Inneren des Trägerteils 6.1 befinden sich kleinere schubladenartige Behälter 10.1, 10.2, 10.3, 10.4, 10.5. Ferner weist das Trägerteil 6.1 Fußelemente 20 auf, deren Unterseite mit einer Gummischicht 21 bestückt ist, die eine rutschfeste Standfläche 22 gewährleistet. Die Fußelemente 20 beispielsweise in Form von Gummistücken können auch auf der Unterseite der Lade angebracht sein.

Eine Besonderheit der Auffangvorrichtung 2.1 ist, dass sowohl der Trägerteil 6.1 und die gegenüber dem Trägerteil bewegliche Lade 9.1 jeweils eine seitliche Öffnung 23; 24 aufweisen, die sich über das gesamte Längen- oder Breitenmaß des Trägerteils 6.1 und entsprechend der Lade 9.1 erstreckt. In Draufsicht auf das Bodenteil 7.1 bilden die oberen freien Kanten 17, 17.1 des Trägerteils 6.1 und der Lade 9.1 jeweils einen Buchstaben U. Dabei sind die beiden Öffnungen 23; 24 bei ineinander geschobenen Teilen der Auffangvorrichtung 2.1 zueinander rechtwinklig angeordnet (vgl. Fig. 9b), wobei die seitliche Öffnung 23 durch die Seitenwand 25.1 der Lade abgedeckt ist.

Beim Herausziehen der Lade 9.1 wird die Öffnung 23 freigegeben. Dies ermöglicht wiederum das Herausziehen bzw. Einschieben der kleineren Behälter 10.1, 10.2, 10.3, 10.4, 10.5 nacheinander aus dem bzw. in das Trägerteil 6.1 über seine seitliche Öffnung 23 in eine mit dem Pfeil bezeichnete Richtung Y, also senkrecht zum Pfeil X. Wie die Fig. 8a zeigt, entsprechen die beiden Pfeile X, Y den bekannten Koordinaten-Achsen.

Die Fig. 10 weist auf die Möglichkeit einer "magnetischen" Festlegung des Schneidebretts 1.1 an dem Trägerteil 6.1 hin. Zu diesem Zweck sind in die Kante 17 der Seitenwand des Trägerteils 6.1 Magnetelemente 26 eingelassen, die mit entsprechenden Gegenmagneten 27 am Schneidebrett 1.1 korrespondieren. Das Bezugszeichen 28 weist auf die Unterseite des Schneidebrettes hin.

### Funktion der Vorrichtung gemäß zweiter Ausführungsform:

Das Trägerteil 6.1 mit der aufgezogenen Lade 9.1 wird auf eine nicht gezeigte Küchenarbeitsplatte gestellt, und das Schneidebrett 1.1 mit seiner nach unten zeigenden, ebenen Flachseite 19 auf die Zapfenelemente 18.1, 18.2, 18.3, 18.4 gelegt, bis diese in die Bohrungen 15.1, 15.2, 15.3, 15.4 am Schneidebrett 1.1 einrasten. Die mit der Ablaufrille 5.2 versehene Flachseite 16 stellt in vorliegendem Fall eine Arbeitsfläche dar, an der beispielsweise gebratenes Fleisch zerkleinert werden kann. Die Abfallreste des Fleisches werden in die teilweise herausgezogene Lade 9.1 (vgl. Fig. 8a) abgeworfen. Der Bratensaft fließt in die Ablaufrille 5.1 ein. Das zerkleinerte Fleisch wird in die unterhalb der Durchlassöffnung 14 positionierten kleinen Behälter 10.5 eingeschoben. Wird der Behälter 10.5 mit dem Schnittgut bestückt, zieht man ihn aus dem Trägerteil, wie es die Fig. 8a zeigt, in Richtung Y heraus und entleert in ein entsprechendes Gefäß.

Nun wird die verschmutzte Oberfläche des Schneidebretts 1.1 mit Küchenkrepp abgewischt und das Schneidebrett 1.1 von dem Trägerteil gehoben. Nach der Reinigung aller Teile wird das Küchen-Utensil 200 erneut zusammengelegt. Das Schneidebrett 1.1 wird gegenüber der in Fig. 8a gezeigten Lage umgedreht. Diesen Zustand zeigt die Fig. 6. Die sichtbare Schneidfläche (Flachseite 19) des Schneidebretts 1.1 ist eben und glatt, daher eignet sich zur Verarbeitung von Gemüse. Die einzelnen Gemüsesorten werden geschnippelt und ebenfalls in die unterhalb der fensterartigen Durchlassöffnung 14 positionierten kleinen Behälter 10.1, 10.2, 10.3, 10.4, 10.5 getrennt eingeschoben. In einer der kleinen Schubladen kann ein Gemüsehobel integriert sein. Die mit dem Schnittgut gefüllten Behälter 10.1, 10.2, 10.3, 10.4, 10.5 werden nacheinander herausgezogen und danach in vorbereitete Töpfe entleert. Die Abfallreste von Gemüse gelangen in die teilweise herausgezogene Lade 9.1, welche auch gänzlich herausgezogen und in eine Biotonne entleert werden kann.

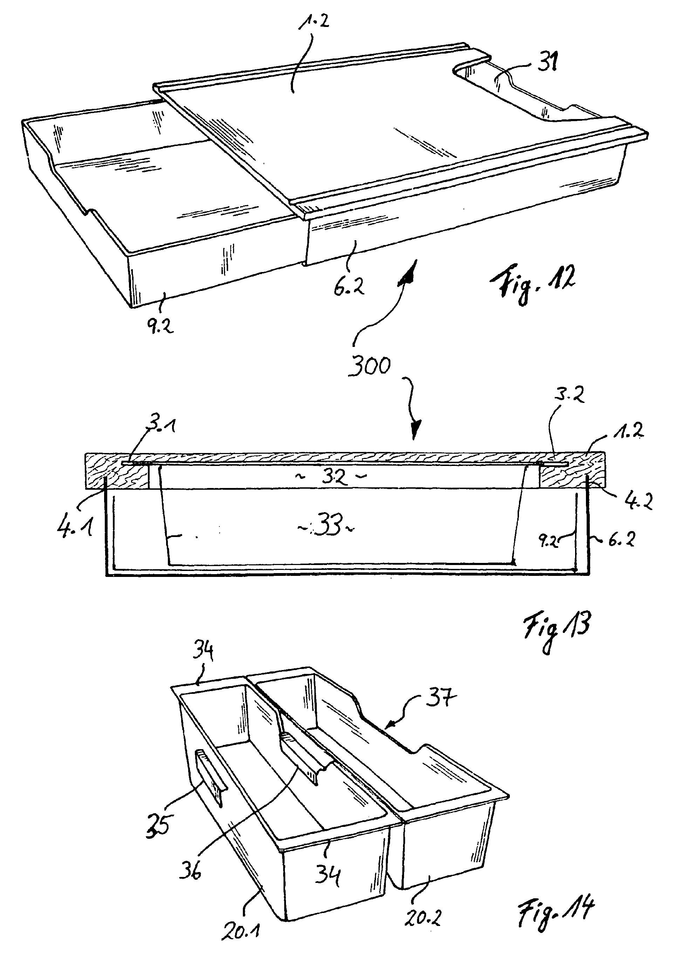

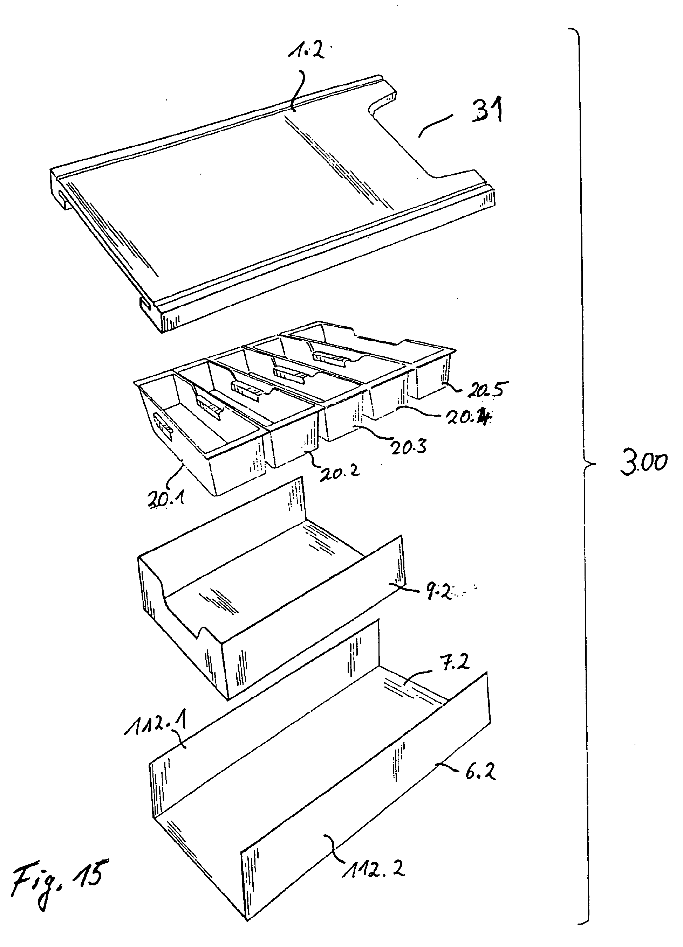

In den Figuren 12 - 15 ist ein Küchen-Utensil 300 einer dritten Ausführungsform dargestellt. Es besteht, wie insbesondere Figur 15 zeigt, aus dem rechteckigen Schneidebrett 1.2, dem ein Trägerteil 6.2, eine Lade 9.2 und ein Set von insgesamt fünf Behältern 20.1 - 20.5 zugeordnet sind. Das Trägerteil 6.2, die Lade 9.2 und die Behälter 20.1 - 20.5 bilden eine Auffangvorrichtung. Das Trägerteil 6.2 besitzt einen U-förmigen Querschnitt, bestehend aus Boden 7.2 und Seitenwänden 112.1 und 112.2. Das Schneidebrett 1.2 wird auf das Trägerteil 6.2 aufgesetzt und bildet eine Abdeckung, die das Trägerteil 6.2 vollständig abdeckt, mit Ausnahme einer Aussparung 31, die eine Abwurföffnung an der Kante einer Schmalseite des Schneidebretts 1.2 darstellt.

Figur 12 zeigt die zusammengestellte Anordnung der Teile in einem arbeitsfähigen Zustand. Das Schneidebrett 1.2 liegt auf dem Trägerteil 6.2 auf. Eine Ansicht von der Stirnseite her zeigt die Figur 13. Wie bereits beschrieben, sorgen kurze Zapfenelemente 4.1 und 4.2 dafür, dass das Schneidebrett 1.1 auf dem Trägerteil 6.1 abnehmbar, aber für die Arbeit fixiert ist. Es ist jedoch auch eine Verschraubung möglich.

Wie aus Figur 13 zu erkennen ist, ist der Querschnitt des Schneidebretts 1.2 mit zwei Längsnuten 3.1 und 3.2 versehen, die sich von einem Rezess 32 auf der Unterseite des Schneidebretts 1.2 in waagerechter Richtung nach beiden Außenseiten des Schneidebretts 1.2 erstrecken. In das Profil des Trägerteils 6.2 ist die Lade 9.2 eingeschoben. Sie kann aus dem Trägerteil 6.2 herausgezogen werden.

Unabhängig von der Lade 9.2 sind die Behälter 20.1-20.5, von denen zwei in Figur 14 dargestellt sind, innerhalb des Hohlraumes 33 des Trägerteils 6.2 zu bewegen. Die Behälter 20.1-20.5 haben eine nach unten konisch zulaufende Gestaltung und stellen etwa quaderförmige, nach oben offene Kästen oder Schubladen dar. An ihren oberen Kanten laufen die Schmalseiten in Flansche 34 aus, die flügelartig sich gegenüberliegen und gleitend in die Längsnuten 3.1 und 3.2 eingeschoben sind.

Die Behälter 20.1-20.5 sind außerdem mit Verbindungsstücken 35 in Form eines Winkelverbinders ausgerüstet, wobei ein frei nach unten ragender Winkelflansch 36 im Bereich einer Wandaussparung 37 die Wand des benachbarten Behälters übergreift. Damit wird ermöglicht, dass die Behälter 20.1 bis 20.5 wie gekoppelte Waggons unterhalb des Schneidebrettes 1.2 in dessen Längserstreckung hängend in den Längsnuten 3.1 und 3.2 verschiebbar sind.

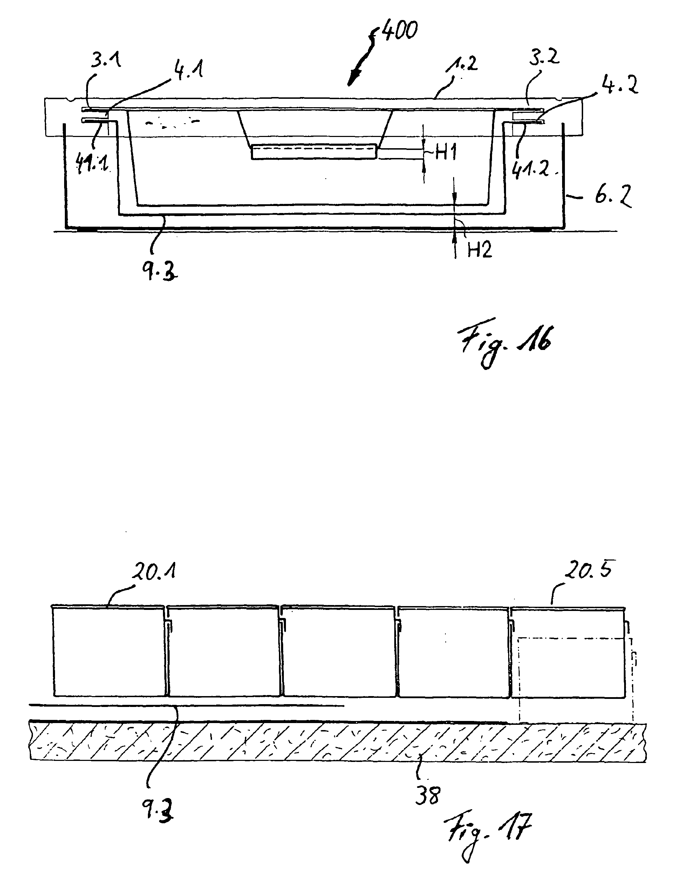

Eine Fortentwicklung der in Figur 13 gezeigten Konstruktion eines Küchen-Utensil zeigt die Figur 16 (Bezugszahl 400). Das auf das Trägerteil 6.2 aufgelegte Schneidebrett 1.2 weist ebenso wie die in Figur 13 dargestellte Ausführungsform einen Rezess 32 auf. Von jeder gegenüberliegenden Seitenwand des Rezesses 32 gehen jeweils zwei Längsnuten 3.1, 3.2, 4.1 und 4.2 aus, die sich über die Länge des Schneidebretts 1.2 parallel zu dessen Längsseiten erstrecken. Dabei ist der Aufbau des Küchen-Utensils 400 so gewählt, dass in das obere Längsnuten-Paar 3.1, 3.2 die Flansche 34 der Behälter 20.1... 20.5 eingeschoben werden, während in das unten liegende Längsnuten-paar 4.1, 4.2 die als Flanschen 41.1 und 41.2 ausgebildeten Seitenränder einer Lade 9.3 eingeschoben werden. Der Boden der Lade 9.3 hält damit einen Abstand H 2 vom Boden des Trägerteils 6.2 ein.

Wie in Figur 17 schematisch dargestellt, können damit die Behälter 20.1 ... 20.5 oberhalb des Bodens der Lade 9.2 im Verbund verschoben werden und im Endbereich des Küchen-Utensils so unter das Schneidebrett 1.2 gestellt werden, dass sie unterhalb der Aussparung 31 stehen und mit zum Verzehr bestimmten Schneidgut direkt gefüllt werden können. Anschließend kann der jeweils außen stehende, letzte Behälter weiter vorgezogen werden und aus dem Verbund ausgeklinkt werden. Eine Zwischenwand zwischen den Behältern 20.1 ... 20.5 ist nicht erforderlich.

### Funktion der Vorrichtung gemäß dritter und vierter Ausführungsform

Das Trägerteil 6.2 mit aufgesetztem, fixiertem Schneidebrett 1.2 und mit eingezogener Lade 9.3 wird auf eine Küchenarbeitsplatte 38 gestellt. Sämtliche Behälter 20.1 ... 20.5 sind untereinander verbunden und in die der Lade 9.3 gegenüberliegende Seite des Trägerteils 6.2 eingeschoben, wobei der letzte Behälter direkt unter der Aussparung 31 steht.

Die Flachseite des Schneidebretts 1.2 stellt die Arbeitsfläche dar, auf der sowohl Gemüse als auch Fleisch zerkleinert werden. Die Abfälle werden in die teilweise herausgezogene Lade 9.2/9.3 (vergleiche Figur 12) abgeworfen. Bei einem Rezept, bei dem beispielsweise zunächst Paprika, dann Zucchini, dann Zwiebeln und Knoblauch, und schließlich Fleischwürfel benötigt werden, können diese Zutaten nach und nach geschnitten und in je einen Behälter 20.1 ... 20.5 abgeworfen werden, der jeweils unter die Aussparung 31 gezogen wird. Der gefüllte Behälter wird dann ausgeklinkt und mit Inhalt zur Weiterverarbeitung bereitgestellt. Die mit Abfall gefüllte Lade 9.3 wird herausgezogen und entleert.

Das Schneidebrett 1.2 kann nach Grobreingung vom Trägerteil 6.2 abgehoben und weiter gereinigt werden. Nach der Säuberung aller Teile wird das Küchen-Utensil 300 bzw. 400 erneut zusammengestellt und ist damit arbeitsbereit.

Da es sich insgesamt um eine flache Anordnung handelt, kann das Küchen-Utensil auch gegen eine Wand geklappt und über eine Schnapp- oder Magnethalterung in aufrechter Position gehalten werden.

Die Materialauswahl für das Küchen-Utensil richtet sich nach praktischen und ästhetischen Gesichtspunkten. Das Schneidebrett wird vorzugsweise aus Holz oder einem Duroplasten hergestellt. Es ist jedoch auch möglich, es aus Glas, Naturstein oder Metall zu fertigen. Die übrigen Teile werden vorzugsweise aus einem hitzebeständigen, leicht zu reinigenden Kunststoff-Material hergestellt.

## Patentansprüche

1. Küchen-Utensil (100), mit wenigstens einem kastenförmigen Trägerteil (6) und einem Schneidebrett (1), das auf das Trägerteil (6) aufgelegt ist, sowie mindestens einen aus dem Trägerteil (6) herausnehmbaren Behälter (10), in den hinein bei entsprechender Stellung zum Rand des Schneidebretts (1) Schneidgut von der Oberseite des Schneidebretts (1) abwerfbar ist,
**dadurch gekennzeichnet,**
**dass** das Trägerteil (6) aus einem Boden (7) und zwei Seitenwänden (4) besteht, die in eine im Schneidebrett (1) angelegte Nut (3) greifen, wodurch das Schneidebrett (1) an dem Trägerteil (6) in Längsrichtung in der Nut (3) führbar ist, und an die innerhalb des Trägerteils (6) jeweils mindestens eine Führungsschiene (8) angelegt ist, in der der mindestens eine herausnehmbare Behälter (10) führbar und festlegbar ist und innerhalb des Trägerteils (6) in Längsrichtung des Schneidebretts (1) verschiebbar und über beide Schmalseiten des Schneidebretts (1) hinaus ausfahrbar ist und in der unterhalb des Behälters (10), den herausnehmbaren Behälter (10) mit wenigstens zwei Seitenwänden (4) umfassend, die parallel zu den Seitenwänden (4) des Trägerteils (6) laufen, mindestens eine verschiebbare Lade (9) führbar und festlegbar ist, die über beide Schmalseiten des Schneidebretts (1) hinaus ausfahrbar ist.

2. Küchen-Utensil (100) nach Anspruch 1, **dadurch gekennzeichnet, dass** das Schneidebrett (1) über Federelemente (12) an den Seitenwänden (4) des Trägerteils (6), die in die Nut (3) des Schneidebretts (1) greifen, verriegelbar festlegbar ist.

3. Küchen-Utensil (100) nach Anspruch 1, **dadurch gekennzeichnet**, das die Führungsschiene (8) mit Federelementen (12) durch Ausnehmungen (13) in den Seitenwänden (4) greift, die in die Nut (3) des Schneidebretts (1) greifen.

4. Küchen-Utensil (100) nach einem der Ansprüche 1 bis 3, **dadurch gekennzeichnet, dass** die Nut (3) seitlich im Schneidebrett (1) angelegt ist.

5. Küchen-Utensil (100) nach einem der Ansprüche 1 bis 4, **dadurch gekennzeichnet, dass** die Lade (9) zwei oder mehr Behälter (10) umfasst.

6. Küchen-Utensil (100) (100) nach Anspruch 5, **dadurch gekennzeichnet, dass** die herausnehmbaren Behälter (10) quaderförmig gestaltet sind und nach oben hin offen sind.

7. Küchen-Utensil (100) nach Anspruch 5 oder 6, **dadurch gekennzeichnet, dass** die quaderförmigen Behälter (10) untereinander durch an den kontaktierenden Behälterseiten angebrachte Verbindungsteile lösbar miteinander verbindbar sind.

8. Küchen-Utensil (100) nach einem der Ansprüche 5 bis 7, **dadurch gekennzeichnet, dass** wenigstens einer der Behälter (10) mit einem Schneidwerkzeug, wie Gemüsehobel, versehen ist.

9. Küchen-Utensil (100) nach einem der Ansprüche 1 bis 8, **dadurch gekennzeichnet, dass** die Lade (9) an der zur Schmalseite des Schneidebretts (1) parallel laufenden Seite eine Aufkantung aufweist.

10. Küchen-Utensil (100) nach Anspruch 9, **dadurch gekennzeichnet, dass** das Schneidebrett (1) jeweils an den Schmalseiten eine Aussparung aufweist.

11. Küchen-Utensil (100) nach einem der Ansprüche 1 bis 10, **dadurch gekennzeichnet, dass** das Trägerteil (6) unter Verzicht auf eine gesonderte Lade (9) den mindestens einen Behälter (10) im Bereich des Trägerteils (6) aufnimmt.

12. Küchen-Utensil (100) nach einem der Ansprüche 1 bis 11, **dadurch gekennzeichnet, dass** am Trägerteil (6) integral ausgebildete Fuß-/Aufhängelemente (11) vorgesehen sind.

13. Küchen-Utensil (100) nach Anspruch 12, **dadurch gekennzeichnet, dass** die Fuß-/Aufhängelemente mit einer rutschfesten Standfläche und stabilem O-Ring ausgebildet sind

14. Küchen-Utensil (100) nach Anspruch 12 oder 13, **dadurch gekennzeichnet, dass** die Fuß-/Aufhängelemente (11) höhenverstellbar sind.

15. Küchen-Utensil (100) nach einem der Ansprüche 1 bis 14, **dadurch gekennzeichnet, dass** im Schneidebrett (1) wenigstens eine zu mindestens einer Schmalseite des Schneidebretts (1) offene Ablaufrille (5) eingearbeitet ist.

16. Küchen-Utensil (100) nach einem der Ansprüche 1 bis 15, **dadurch gekennzeichnet, dass** das Schneidebrett (1) aus Holz oder Holzwerkstoff, Kunststoff, Glas, Keramik oder Metall hergestellt ist.

17. Küchen-Utensil (100) nach Anspruch 16, **dadurch gekennzeichnet, dass** das Schneidebrett (1) aus wenigstens zwei Materialschichten zusammengefügt ist.

18. Küchen-Utensil (100) nach einem der Ansprüche 1 bis 17, **dadurch gekennzeichnet, dass** der Trägerteil (6) und/oder die Lade (9) und/oder die Behälter (10) aus Holz oder Holzwerkstoff, aus Kunststoff, Glas, Beton oder Metall herstellbar sind.

19. Küchen-Utensil (100) nach einem der Ansprüche 1 bis 18, **dadurch gekennzeichnet, dass** das Schneidebrett (1) beidseitig, dass heißt, mit seiner Unter- oder Oberseite zum Inneren des Trägerteils (6) gerichtet, an dem Trägerteil führbar und festlegbar ist.

## Claims

1. Kitchen utensil (100) having at least one box-shaped support part (6) and a chopping board (1) which is placed onto the support part (6), and at least one container (10), which can be removed from the support part (6) and into which cut material can be dropped from the top side of the chopping board (1) when the container is positioned accordingly with respect to edge of the chopping board (1),
**characterised in that**
the support part (6) consists of a base (7) and two sidewalls (4) which engage into a slot (3) provided in the chopping board (1), whereby the chopping board (1) can be guided on the support part (6) in the longitudinal direction in the slot (3), and to which, within the support part (6), there is attached in each case at least one guide rail (8), in which the at least one removable container (10) can be guided and fixed and can be displaced within the support part (6) in the longitudinal direction of the chopping board (1) and can be extended beyond both narrow sides of the chopping board (1) and in which beneath the container (10), comprising the removable container (10) having at least two sidewalls (4), which run in parallel with the sidewalls (4) of the support part (6), it is possible to guide and fix at least one displaceable drawer (9) which can be extended beyond both narrow sides of the chopping board (1).

2. Kitchen utensil (100) as claimed in claim 1, **characterised in that** the chopping board (1) can be fixed in a lockable manner via spring elements (12) on the sidewalls (4) of the support part (6) which engage into the slot (3) in the chopping board (1).

3. Kitchen utensil (100) as claimed in claim 1, **characterised in that** the guide rail (8) engages with spring elements (12) through cut-outs (13) in the sidewalls (4) which engage into the slot (3) in the chopping board (1).

4. Kitchen utensil (100) as claimed in any one of claims 1 to 3, **characterised in that** the slot (3) is provided on the side of the chopping board (1).

5. Kitchen utensil (100) as claimed in any one of claims 1 to 4, **characterised in that** the drawer (9) comprises two or more containers (10).

6. Kitchen utensil (100) (100) [sic] as claimed in claim 5, **characterised in that** the removable containers (10) are cube-shaped and are open at the top.

7. Kitchen utensil (100) as claimed in claim 5 or 6, **characterised in that** the cube-shaped containers (10) can be mutually interconnected in a releasable manner by means of connection parts provided on the contacting container sides.

8. Kitchen utensil (100) as claimed in any one of claims 5 to 7, **characterised in that** at least one of the containers (10) is provided with a cutting tool, such as a mandolin slicer.

9. Kitchen utensil (100) as claimed in any one of claims 1 to 8, **characterised in that** the drawer (9) comprises an upturn on the side running in parallel with the narrow side of the chopping board (1).

10. Kitchen utensil (100) as claimed in claim 9, **characterised in that** the chopping board (1) comprises a recess in each case on the narrow sides.

11. Kitchen utensil (100) as claimed in any one of claims 1 to 10, **characterised in that** with the omission of a separate drawer (9) the support part (6) receives the at least one container (10) in the region of the support part (6).

12. Kitchen utensil (100) as claimed in any one of claims 1 to 11, **characterised in that** foot/suspension elements (11) are provided which are integrally formed on the support part (6).

13. Kitchen utensil (100) as claimed in claim 12, **characterised in that** the foot/suspension elements are formed with a non-slip standing surface and a stable O-ring.

14. Kitchen utensil (100) as claimed 12 or 13, **characterised in that** the foot/suspension elements (11) are height-adjustable.

15. Kitchen utensil (100) as claimed in any one of claims 1 to 14, **characterised in that** at least one run-off channel (5) which is open with respect to at least one narrow side of the chopping board (1) is incorporated in the chopping board (1).

16. Kitchen utensil (100) as claimed in any one of claims 1 to 15, **characterised in that** the chopping board (1) is produced from wood or derived timber product, synthetic material, glass, ceramic or metal.

17. Kitchen utensil (100) as claimed in claim 16, **characterised in that** the chopping board (1) is assembled from at least two material layers.

18. Kitchen utensil (100) as claimed in any one of claims 1 to 17, **characterised in that** the support part (6) and/or the drawer (9) and/or the container (10) can be produced from wood or derived timber product, from synthetic material, glass, concrete or metal.

19. Kitchen utensil (100) as claimed in any one of claims 1 to 18, **characterised in that** the chopping board (1) can be guided and fixed on the support part on both sides, i.e., with its bottom side or top side directed towards the interior of the support part (6).

## Revendications

1. Ustensile (100) de cuisine comprenant au moins un support (6) en forme de caisson et une planche à découper (1) qui est posée sur le support (6), ainsi qu'au moins un récipient (10), extractible hors du support (6), dans lequel une matière découpée en position correspondante au bord de la planche à découper (1) peut être rejetée à partir du côté supérieur de la planche à découper (1),
**caractérisé en ce que**
le support (6) se compose d'un fond (7) et de deux parois latérales (4), qui pénètrent dans une rainure (3) ménagée dans la planche à découper (1) de sorte que la planche à découper (1) peut être guidée dans la rainure (3) en direction longitudinale sur le support (6), et sur chacune desquelles est posé à l'intérieur du support (6) au moins un rail de guidage (8), dans lequel le au moins un récipient extractible (10) peut être guidé et fixé, peut coulisser à l'intérieur du support (6) dans la direction longitudinale de la planche à découper (1) et peut être extrait par les deux petits côtés de la planche à découper (1), et dans lequel peut être guidé et fixé au moins un chargeur coulissant (9) sous-jacent au récipient (10), entourant le récipient extractible (10) avec au moins deux parois latérales (4) parallèles aux parois latérales (4) du support (6), et extractible par les deux petits côtés de la planche à découper (1).

2. Ustensile (100) de cuisine selon la revendication 1, **caractérisé en ce que** la planche à découper (1) est fixable, et peut être verrouillée, au moyen d'éléments élastiques (12) aux parois latérales (4) du support (6) qui pénètrent dans la rainure (3) de la planche à découper (1).

3. Ustensile (100) de cuisine selon la revendication 1, **caractérisé en ce que** le rail de guidage (8) pénètre, au moyen d'éléments élastiques (12), à travers des évidements (13) ménagés dans les parois latérales (4) qui pénètrent dans la rainure (3) de la planche à découper (1).

4. Ustensile (100) de cuisine selon l'une quelconque des revendications précédentes, **caractérisé en ce que** la rainure (3) est formée latéralement dans la planche à découper (1).

5. Ustensile (100) de cuisine selon l'une quelconque des revendications précédentes, **caractérisé en ce que** le chargeur (9) contient deux récipients (10) ou davantage.

6. Ustensile (100) de cuisine selon la revendication 5, **caractérisé en ce que** les récipients extractibles (10) sont parallélépipédiques et ouverts vers le haut.

7. Ustensile (100) de cuisine selon la revendication 5 ou 6, **caractérisé en ce que** les récipients parallélépipédiques (10) peuvent être attachés entre eux de façon libérable par des pièces d'attache disposées sur les côtés, qui sont en contact entre eux, des récipients.

8. Ustensile (100) de cuisine selon l'une quelconque des revendications 5 à 7, **caractérisé en ce qu'**au moins l'un des récipients (10) est pourvu d'un outil de découpe comme un coupe-légumes en tranches.

9. Ustensile (100) de cuisine selon l'une quelconque des revendications précédentes, **caractérisé en ce que** le chargeur (9) comporte une arête dressée sur le côté de tracé parallèle au petit côté de la planche à découper (1).

10. Ustensile (100) de cuisine selon la revendication 9, **caractérisé en ce qu'**un évidement est ménage dans chacun des petits côtés de la planche à découper (1).

11. Ustensile (100) de cuisine selon l'une quelconque des revendications précédentes, **caractérisé en ce que** le support (6) reçoit, en l'absence d'un chargeur séparé (9), le au moins un récipient (10) dans la zone du support (6).

12. Ustensile (100) de cuisine selon l'une quelconque des revendications précédentes, **caractérisé en ce que** le support (6) comporte, d'un seul tenant, des éléments de pieds/de suspension (11).

13. Ustensile (100) de cuisine selon la revendication 12, **caractérisé en ce que** les éléments de pieds/de suspension sont pourvus d'une surface portante antidérapante et d'un joint torique stable.

14. Ustensile (100) de cuisine selon la revendication 12 ou 13, **caractérisé en ce que** les éléments de pieds/de suspension (11) sont réglables en hauteur.

15. Ustensile (100) de cuisine selon l'une quelconque des revendications précédentes, **caractérisé en ce qu'**au moins une cannelure de décharge (5) ouverte vers au moins un petit côté de la planche à découper (1) est usinée dans la planche à découper (1.

16. Ustensile (100) de cuisine selon l'une quelconque des revendications précédentes, **caractérisé en ce que** la planche à découper (1) peut être fabriquée en bois ou en matériau dérivé du bois, en matière plastique, en verre, en céramique, en béton ou en métal.

17. Ustensile (100) de cuisine selon la revendication 16, **caractérisé en ce que** la planche à découper (1) est assemblée à partir d'au moins deux couches de matériaux.

18. Ustensile (100) de cuisine selon l'une quelconque des revendications précédentes, **caractérisé en ce que** le support (6) et/ou le chargeur (9) et/ou les récipients (10) peuvent être fabriqués en bois ou en matériau dérivé du bois, en matière plastique, en verre, en béton ou en métal.

19. Ustensile (100) de cuisine selon l'une quelconque des revendications précédentes, **caractérisé en ce que** la planche à découper (1) peut être guidée et fixée, sur le support, sur l'un ou l'autre de ses côtés, c'est-à-dire avec son côté inférieur ou supérieur orienté vers l'intérieur du support (6).
